# EUROPÄISCHE PATENTANMELDUNG

(11) **EP 0 866 535 A2**
(43) Veröffentlichungstag der Anmeldung: **23.09.1998**
(21) Anmeldenummer: 98103356.6
(22) Anmeldetag: 26.02.1998
(51) Int. Cl.: H02H 3/33, H02H 3/347, H02H 5/12

(54) **Fehlerstromschutzschalter fuer Stromkreise mit hohen Fehlerströmen**

(30) Priorität: 21.03.1997 DE 29705187 U
(71) Anmelder: Elischer, Werner, 91080 Spardorf (DE)
(72) Erfinder: Elischer, Werner, 91080 Spardorf (DE)

(57) **Zusammenfassung**

Solche Fehlerstromschutzschalter haben wenigstens einen Summenstromwandler und eine nachgeschaltete Auswerteschaltung. Erfindungsgemäß sind zwei Summenstromwandler (11, 21, 31) mit je einem Ringkern und je einer Auswerteschaltung mit Signalkreis (13, 23, 33) vorhanden, wobei die Signalkreise (13, 23, 33) für unterschiedlich hohe Ansprechwerte ausgelegt sind und eine einzige Auslösemechanik (14, 24) ansteuern.

## Beschreibung

Die Erfindung bezieht sich auf einen Fehlerstromschutzschalter für Stromkreise mit hohen Fehlerströmen mit wenigstens einem Summenstromwandler und einer nachgeschalteten Auswerteschaltung.

Fehlerstromschutzschalter mit Summenstromwandlern sind beispielsweise aus der DE 36 18 924 A1 bekannt. In Wohngebäuden werden üblicherweise separate Fehlerstromschutzschalter mit unterschiedlichen Ansprechwerten parallel eingesetzt. Gemäß der Veröffentlichung 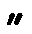 etz" Bd. 110 (1989), S. 580 - 584 werden Lichtstromkreise und Steckdosenstromkreise im Wohnbereich mit Fehlerstromschutzschaltern mit einem Auslösestrom von beispielsweise 30 mA geschützt. Der Schutz von Personen bei direkter Berührung spannungsführender Teile ist damit in hinreichender Weise gewährleistet. In Stromkreisen mit Geräten, welche vor allem nach längerer Betriebsdauer höhere Fehlerströme fuhren können, wie Herde, Boiler, Waschmaschinen, werden dagegen Fehlerstromschutzschalter mit einem Auslösestrom von beispielsweise 300 mA eingesetzt.

Beim Stand der Technik werden also für Stromkreise mit betriebsbedingten hohen Fehlerströmen solche Fehlerstromschutzschalter mit entsprechend hohem Ansprechwert eingesetzt, welche vor allem dem Brandschutz dienen. Dabei wird ein nur begrenzter Schutz für Personen in Kauf genommen.

Da bei letzteren Stromkreisen mit den betriebsbedingten hohen Fehlerströmen bisher immer nur ein Fehlerstromschutzschalter mit hohem Ansprechwert eingesetzt wird, ergibt sich also bei indirekter Berührung von elektrischen Geräten im Fehlerfall kein hinreichender Schutz.

Aufgabe der Erfindung ist es daher, einen Fehlerstromschutzschalter vorzuschlagen, bei welchem für Stromkreise mit hohen Fehlerströmen insbesondere auch der Schutz für Personen bei indirekter Berührung gewährleistet ist.

Die Aufgabe ist erfindungsgemäß dadurch gelöst, daß zwei Summenstromwandler mit je einem Ringkern und je einer Auswerteschaltung mit Signalkreis vorhanden sind, wobei die Signalkreise für unterschiedlich hohe Ansprechwerte ausgelegt sind und eine einzige Auslösemechanik ansteuern.

Im Rahmen der Erfindung unterscheiden sich die Ansprechwerte der beiden Signalkreise vorzugsweise um den Faktor 5 bis 15, insbesondere um den Faktor 10. Beispielsweise kann der erste Signalkreis auf ca. 300 mA und der zweite Signalkreis auf ca. 30 mA ausgelegt sein.

Im Rahmen der Erfindung erfaßt der Summenstromwandler für den höheren Ansprechwert vorzugsweise die Phasen- und den Neutralleiter, während der Summenstromwandler für den niedrigen Ansprechwert die Phasen, den Neutralleiter sowie auch den Schutzleiter erfaßt. Speziell die Abschaltmechanik wirkt auf die Phasenleiter und den Neutralleiter ein, nicht aber auf den Schutzleiter.

Durch den erfindungsgemäßen Fehlerstromschutzschalter mit zwei Ansprechwerten wird die gewünschte Sicherheit weitestgehend erreicht. Der obere Ansprechwert bezieht sich auf den gesamten Fehlerstrom des Stromkreises und bietet die bisherige Sicherheit, vor allem für den Brandschutz. Der untere Ansprechwert bezieht sich nur auf den Anteil des Fehlerstromes, welcher direkt zur Erde abfließt. Der über den Schutzleiter zurückfließende Strom wird dabei nicht mit erfaßt. Da der betriebsbedingte Fehlerstrom des Stromkreises über den Schutzleiter zurückfließt, löst er den unteren Ansprechwert nicht aus. Fließt jedoch bei indirekter Berührung durch eine Person ein Strom zur Erde ab, welcher größer ist als der untere Wert, so schaltet der Fehlerstromschutzschalter über den unteren Ansprechwert ab. Damit ist also der gewünschte Schutz auch bei indirekter Berührung weitestgehend gewährleistet.

Weitere Einzelheiten und Vorteile der Erfindung ergeben sich aus der nachfolgenden Figurenbeschreibung von Ausführungsbeispielen anhand der Zeichnung in Verbindung mit weiteren Schutzansprüchen. Es zeigen
- Figur 1: ein Beispiel für die Gefährdung von Personen bei Stromkreisen mit hohen Fehlerströmen und Einsatz eines bekannten Fehlerstromschutzschalters
- Figur 2: den Schutz bei Stromkreisen mit hohen Fehlerströmen durch Einsatz von Fehlerstromschutzschaltern mit zwei Ansprechwerten und
- Figur 3: eine Alternative zur Figur 2 mit einem Stromwandler für den Schutzleiter.

Gleiche bzw. gleichwirkende Teile haben in den Figuren gleiche bzw. sich entsprechende Bezugszeichen. Die Figuren werden teilweise gemeinsam beschrieben.

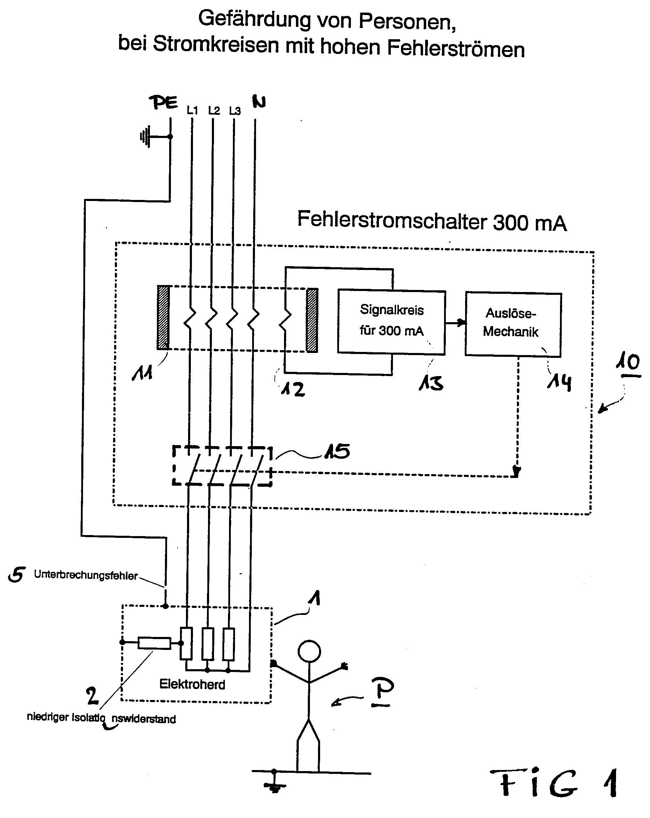

In Figur 1 ist ein Fehlerstromschutzschalter dargestellt, wie er vom Stand der Technik bekannt ist und beispielsweise für Fehlerströme von 300 mA eingesetzt wird. Die Phasen L1, L2, L3 und M eines Drehstromnetzes sind an ein elektrisches Gerät 1, beispielsweise einen Elektroherd, angeschlossen.

Üblicherweise werden die Phasen L1, L2, L3 und der Neutralleiter N als Primärwicklungen durch einen Summenstromwandler 11 des Fehlerstromschutzschalters 10 geführt und dessen Sekundärwicklung 12 auf einen Signalkreis 13 für eine vorgegebene Ansprechschwelle gegeben. Beispielsweise hat der Signalkreis 13 eine Ansprechschwelle von 300 mA. Vom Signalkreis 13 wird eine Auslösemechanik 14 angesteuert, die auf Schalter 15 in den Phasenleitungen L1 bis L3 eingreift.

Beim Beispiel gemaß Figur 1 kann am Elektroherd 1 ein Unterbrechungsfehler 5 am Schutzleiter PE entstehen. Dadurch findet eine Gefährdung einer Person P bei indirekter Berührung der spannungsführenden Teile statt. Über den niedrigen Isolationswiderstand der Heizelemente kann über das Gehäuse und die berührende Person P ein Strom zur Erde fließen, welcher insbesondere unter 300 mA liegen kann und damit den Fehlerstromschalter 10 nicht auslöst. Damit entsteht für die berührende Person P eine lebensbedrohende Situation.

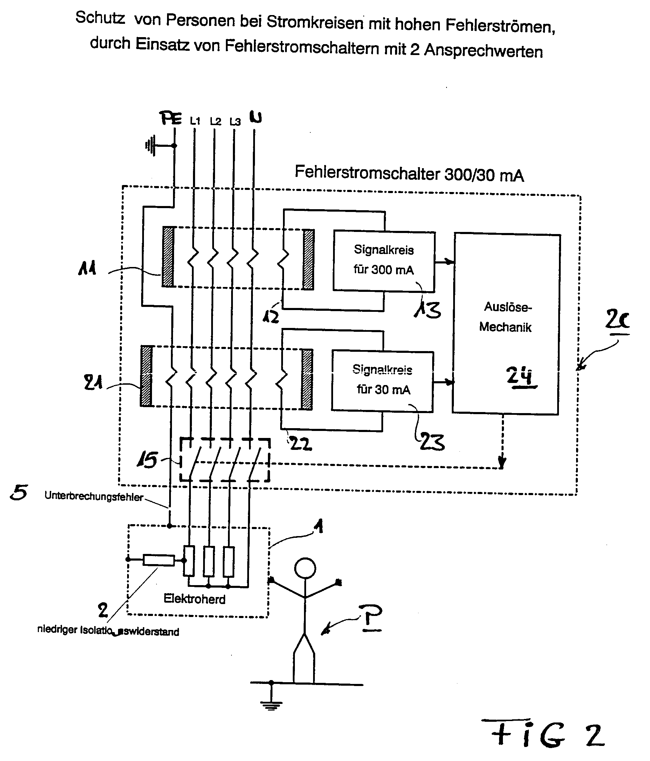

In Figur 2 ist ein Fehlerstromschutzschalter 20 dargestellt, der zwei Summenstromwandler 11 und 21 aufweist. Dabei werden wie in Figur 1 durch den Summenstromwandler 11 als Primärwicklungen nur die Phasenleiter L1, L2 und L3 und der Neutralleiter N geführt, während der Schutzleiter PE vorbeiläuft. Durch den Summenstromwandler 21 verlaufen dagegen die Phasenleiter L1 bis L3, der Neutralleiter N und der Schutzleiter PE.

In entsprechender Weise wie in Figur 1 ist die Sekundärwicklung 12 auf den Signalkreis 13 für 300 mA geführt, während die Sekundärwicklung 22 auf einen Signalkreis 23 für 30 mA gegeben wird. Von beiden Signalkreisen 13 und 23 wird eine gemeinsame Auslösemechanik 24 angesteuert, deren Ausgang entsprechend Figur 1 auf eine Schalteinheit 15 in den Phasenleitungen L1 bis L3 einwirkt.

Durch den Fehlerstromschutzschalter mit den Ansprechwerten von 300 mA und 30 mA wird die Sicherheit der Person P erhöht. Der obere Ansprechwert von 300 mA gilt wie in Figur 1 für den gesamten Fehlerstrom, während für den unteren Ansprechwert von 30 mA nur der Anteil des Fehlerstromes wirksam wird, welcher direkt zur Erde fließt und nicht über den Schutzleiter PE zurückgeführt wird.

Bei Figur 2 bietet der Auslösekreis 13 den normalen Schutz eines Fehlerstromschutzschalters für 300 mA. Die angeschlossenen Geräte, deren Fehlerströme zu den Gehäusen im Normalfall insgesamt unter 300 mA liegen, bewirken keine Auslösung. Bei Gerätefehlern mit einem Fehlerstrom über 300 mA erfolgt dagegen eine Auslösung. Der Auslösekreis für 30 mA bewirkt dagegen bei Fehlerströmen über 30 mA dann keine Auslösung, wenn diese über den Schutzleiter PE abgeleitet werden, da gemäß Figur 2 der Schutzleiter vom Summenstromwandler 22 mit erfaßt wird. Bei einem Unterbrechungsfehler am Schutzleiter PE kann dagegen ein Fehlerstrom über das Gehäuse des Gerätes 1 und die berührende Person P zur Erde fließen. Beträgt dieser Strom mehr als 30 mA, so löst der 30 mA-Auslösekreis 23 die Abschaltung aus, da dieser Strom nicht über den Summenstromwandler zurückfließt. Damit ist der Schutz von Personen auch bei indirekter Berührung weitestgehend gewährleistet.

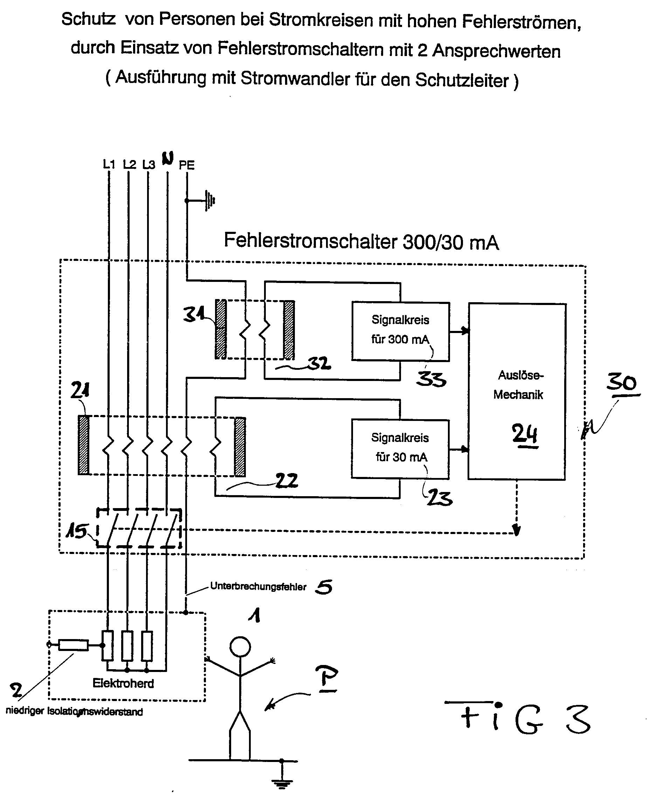

In Figur 3 ist ein Fehlerstromschutzschalter 30 mit zwei Ansprechwerten dargestellt, bei dem der zweite Summenstromwandler 21 entsprechend Figur 2 ausgebildet ist. Durch diesen Summenstromwandler 21 sind die Phasenleiter L1, L2 und L3 der Neutralleiter N und der Schutzleiter PE als Primärwicklungen geführt. Die Sekundärwicklung 22 wird auf den Signalkreis 23 für einen niedrigen Ansprechwert geführt, die auf die Auslösemechanik 24 einwirkt.

Als weiterer Summenstromwandler ist in Figur 3 ein zusätzlicher Summenstromwandler 31 vorhanden, durch den als Primärwicklung nur der Schutzleiter PE geführt wird. Die Sekundärwicklung 32 wird auf einen Signalkreis 33 für einen hohen Summenstrom geführt, von dem gleichermaßen die Auslösemechanik 24 angesteuert wird. Das Ausgangssignal der Auslösemechanik 24 wirkt wiederum auf eine Schalteinheit 15 für die Phasen L1 bis L3 und den Neutralleiter N ein.

Bei dem Fehlerstromschutzschalter mit den beiden Ansprechwerten gemäß Figur 3 bezieht sich also der obere Ansprechwert für beispielsweise 300 mA auf den Anteil des Fehlerstromes, welcher über den Schutzleiter PE zurückfließt. Damit bietet der obere Ansprechwert die übliche Sicherheit für den Brandschutz bei Fehlerströmen innerhalb der Geräte. Der untere Ansprechwert von beispielsweise 30 mA bezieht sich wie in Figur 2 auf den Anteil des Fehlerstromes, welcher direkt zur Erde abfließt. Der über den Schutzleiter PE zurückfließende Strom wird aber dabei nicht mit erfaßt. Da der betriebsbedingte Fehlerstrom des Stromkreises über den Schutzleiter zurückfließt, löst er den Signalkreis 33 mit unterem Ansprechwert nicht aus. Fließt jedoch bei indirekter Berührung durch eine Person ein Strom direkt zur Erde, welcher größer ist als 30 mA, so schaltet der Fehlerstromschutzschalter 30 über den Signalkreis 33 mit unterem Ansprechwert ab.

Beim Fehlerstromschutzschalter gemäß Figur 3 ist der gewünschte Schutz bei indirekter Berührung spannungsführender Teile ebenfalls weitestgehend gewährleistet. Der untere Ansprechwert dient hier außerdem dem Brandschutz bei Fehlerströmen außerhalb der Geräte, z.B. bei defekten Kabeln, von denen ein Fehlerstrom über feuchte Wände, Rohrleitungen oder Stahlarmierungen direkt zur Erde fließen kann.

Das Ausführungsbeispiel gemäß Figur 3 ist gegenüber Figur 2 insofern vereinfacht, daß für den oberen Ansprechwert anstelle eines Summenstromwandlers mit den Leitungen L1, L2, L3 und N nur noch ein Stromwandler mit dem Schutzleiter PE als Primärwicklung eingesetzt wird. Dafür kann der Leiterquerschnitt geringer gewählt werden.

Die beschriebenen Beispiele von Fehlerstromschutzschaltern mit zwei Ansprechwerten sind in Wohnhäusern besonders für den Küchenbereich sinnvoll, da Elektroherde und andere Geräte im Normalfall bereits hohe Fehlerströme führen können. Dabei können sich insbesondere Probleme dann ergeben, wenn ein Elektroherd in ein Spülzentrum integriert ist, so daß ein wesentlicher Anteil des Fehlerstromes über das Wasserleitungsnetz zur Erde abgeleitet wird.

Daneben ist im Haus-Versorgungsbereich der Stromkreis für einen Heizölbrenner ebenfalls kritisch, da hier die auftretenden Fehlerströme ebenfalls über das Wasserleitungsnetz zur Erde abfließen können.

Für Geschirrspüler und Waschmaschinen sind keine Probleme zu erwarten, da sie über isolierende Schläuche an das Wasserleitungsnetz angeschlossen sind. Der Widerstand des Wassers in den Schläuchen ist wesentlich hochohmiger als der des Schutzleiters, so daß nur ein geringer Teil des Fehlerstromes zur Erde abfließt. Für Kühlschränke, Tiefkühltruhen, Wäschetrockner od. dgl. gibt es ebenfalls keine Probleme, da die Gehäuse dieser Geräte nur über den Schutzleiter mit der Erde verbunden sind. Bei Rundfunkempfängern, Fernsehgeräten und Videorekordern kann über den Koaxialaußenleiter des Antennenanschlusses eine niederohmige Verbindung zur Erde bestehen. Diese Geräte haben jedoch nur einen sehr geringen Fehlerstrom, so daß beim Betrieb von Fehlerstromschutzschaltern mit zwei Ansprechwerten keine Probleme entstehen.

Der Einsatz von Fehlerstromschutzschaltern mit zwei Ansprechwerten ist auch in vielen Bereichen der Industrie sinnvoll, da oft viele gleiche Geräte an einen Stromkreis angeschlossen sind, wodurch die Fehlerstromverhältnisse gut überschaubar sind. Beispielsweise kann bei Glühöfen die Sicherheit für Personen wesentlich durch den Einsatz der beschriebenen Fehlerstromschutzschalter erhöht werden, da diese Geräte betriebsbedingt hohe Fehlerströme aufweisen, welche jedoch weitestgehend über den Schutzleiter abgeleitet werden.

## Patentansprüche

1. Fehlerstromschutzschalter für Stromkreise mit hohen Fehlerströmen mit wenigstens einem Summenstromwandler und einer nachgeschalteten Auswerteschaltung, **dadurch gekennzeichnet,** daß zwei Summenstromwandler (11, 21, 31) mit je einem Ringkern und je einer Auswerteschaltung mit Signalkreis (13, 23, 33) vorhanden sind, wobei die Signalkreise (13, 23, 33) für unterschiedlich hohe Ansprechwerte ausgelegt sind und eine einzige Auslösemechanik (14, 24) ansteuern.

2. Fehlerstromschutzschalter nach Anspruch 1, **dadurch gekennzeichnet,** daß die Ansprechwerte der beiden Signalkreise (13, 23, 33) sich um den Faktor 5 bis 15 unterscheiden.

3. Fehlerstromschutzschalter nach Anspruch 2, **dadurch gekennzeichnet,** daß die Ansprechwerte der beiden Signalkreise (13, 23, 33) sich um den Faktor 10 unterscheiden.

4. Fehlerstromschutzschalter nach Anspruch 1 oder einem der Ansprüche 2 und 3, **dadurch gekennzeichnet,** daß der erste Signalkreis (13, 33) für ca. 300 mA ausgelegt ist.

5. Fehlerstromschutzschalter nach Anspruch 1 oder einem der Ansprüche 2 bis 4, **dadurch gekennzeichnet,** daß der zweite Signalkreis (23) für ca. 30 mA ausgelegt ist.

6. Fehlerstromschutzschalter nach einem der vorhergehenden Ansprüche, **dadurch gekennzeichnet,** daß ein separater Summenstromwandler (31) für den Schutzleiter (PE) vorgesehen ist.

7. Fehlerstromschutzschalter nach Anspruch 5, **dadurch gekennzeichnet,** daß der Summenstromwandler (31) für den Schutzleiter (PE) mit dem ersten Signalkreis (33) für den höheren Ansprechwert verbunden ist.

8. Fehlerstromschutzschalter nach Anspruch 1, **dadurch gekennzeichnet,** daß der Summenstromwandler (21) für den niedrigen Ansprechwert die Phasenleiter (L1, L2, L3), den Neutralleiter (N) und den Schutzleiter (PE) erfaßt.

9. Fehlerstromschutzschalter nach Anspruch 1, **dadurch gekennzeichnet,** daß der Summenstromwandler (11) für den höheren Ansprechwert die Phasenleiter (L1, L2, L3) und den Neutralleiter (N) erfaßt.

10. Fehlerstromschutzschalter nach Anspruch 9, **da durch gekennzeichnet,** daß die Abschaltmechanik (24) die Phasenleiter (L1, L2, L3) und den Neutralleiter (N) unterbricht.
